# EUROPEAN PATENT SPECIFICATION

(11) **EP 3 499 363 B1**
(45) Date of publication and mention of the grant of the patent: **27.10.2021**
(21) Application number: 16915425.9
(22) Date of filing: 06.09.2016
(51) Int. Cl.: G06F 11/30, G06F 16/903

(54) **DATA COLLECTION METHOD AND APPARATUS**
DATENERFASSUNGSVERFAHREN UND VORRICHTUNG
PROCÉDÉ ET APPAREIL DE COLLECTE DE DONNÉES

(43) Date of publication of application: 19.06.2019
(73) Proprietor: Honor Device Co., Ltd., Shenzhen, Guangdong 518040 (CN)
(72) Inventor: ZHANG, Qinglong, Shenzhen Guangdong 518129 (CN)
(74) Representative: Epping - Hermann - Fischer
(86) International application number: PCT/CN2016/098240
(87) International publication number: WO 2018/045489

(56) References cited:
- WO-A2-2013/140076
- CN-A- 102 314 348
- CN-A- 103 455 520
- CN-A- 103 942 054
- CN-A- 103 942 054
- US-A1- 2016 134 924

## Description

### TECHNICAL FIELD

The present invention relates to the field of communications technologies, and in particular, to a data collection method and apparatus.

### BACKGROUND

With gradual popularization of intelligent terminals, the intelligent terminals have been widely applied to various different life scenarios, including a series of social activities such as party, shopping, travel, entertainment, and social communication. Therefore, a user needs to install and use various applications in an intelligent terminal device, to implement the foregoing social activities. When the user uses the terminal device, a large amount of data related to the user is generated, and the data embodies a user attribute most directly. In this case, it is difficult to use data of a single application to depict the user attribute. How to integrate valuable data of all applications in the intelligent terminal device is a problem to be resolved.

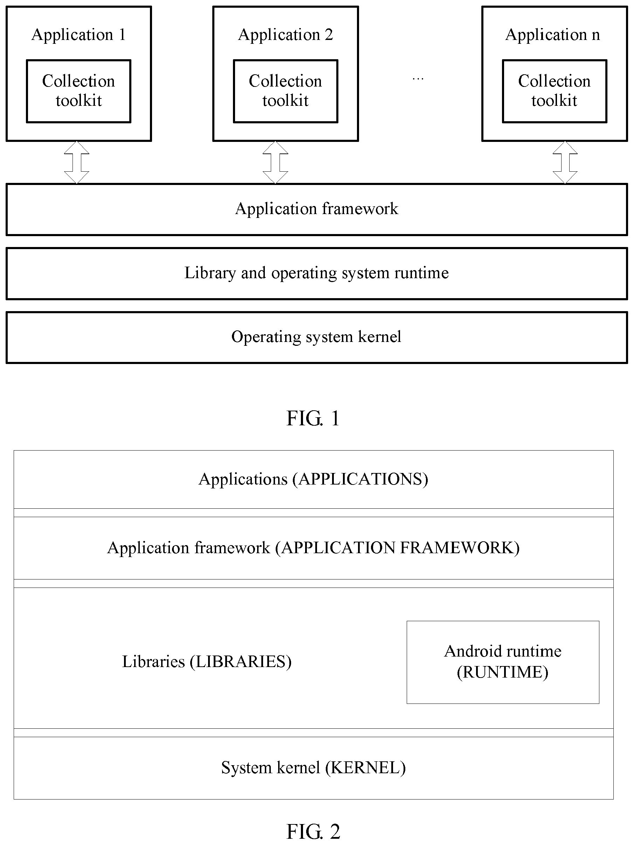

Currently, a terminal may collect data in two manners. One manner is that a collection toolkit is integrated into an application and the collection toolkit reports data to a server. If data of a plurality of applications needs to be collected, the collection toolkit needs to be integrated into each application, as shown in FIG. 1. The other manner is that a log of interaction between the terminal device and the server is directly collected on the server side. A granularity of the second collection manner is coarser than that of the first collection manner. For example, when a user gender is collected, in the first collection method, the user gender can be collected by triggering a configuration item in the collection toolkit when a user edits the attribute, while in the second collection method, user-sensitive data is quite difficult to collect.

An application developer customizes different collection toolkits for different collection content of different applications, integrates a collection toolkit customized for a developed application into the application, and configures an application data collection item for a page that needs to be collected. When collecting data, the terminal reports the collected data to the server, and the server side completes data analysis and data storage.

It may be learned that in the solution in which a collection toolkit is used to collect data on an application, the collection toolkit and the application are tightly coupled. This may cause the following problem: When a version of the application is updated, the collection toolkit also needs to be updated synchronously. Consequently, development and maintenance complexity of the application are relatively high. Therefore, how to reduce a degree of coupling between an application and processing and configuration operations that are related to data collection is an urgent problem to be studied and resolved in the industry.

Document CN 103942054 A provides a data evidence obtaining system based on the Android. The data evidence obtaining system based on the Android comprises a virtual interface unit, a software data evidence obtaining subsystem and a hardware data evidence obtaining subsystem. The virtual interface unit is connected with a Linux kernel of the Android of a terminal, a virtual layer is formed between an application framework layer and the Linux kernel of the Android, and the Android using the terminal takes the virtual layer as an application of the Android of the terminal. The software data evidence obtaining subsystem is used for acquiring software data of the terminal. The hardware data evidence obtaining subsystem is used for acquiring chip hardware data of the terminal.

Document US 2016/0134924 A1 discusses that a passive data collection method is sometime more reliable because the direct query method might not be available or possible through a 3rd party channel application. Accordingly, an improved data collection method is provided. The method includes: running a channel application located on a first layer of an operating system of a user device; receiving an application interface (API) call, from the channel application, for a graphic rendering module located on a second layer of the operating system, wherein the graphic rendering module is a non-video playback module; intercepting metadata sent to the graphic rendering module; determining identifying information of a content based on the intercepted metadata; and storing the determined identifying information of the content.

### SUMMARY

The present invention is defined by the attached set of claims.

Embodiments of the present invention provide a data collection method and apparatus, to reduce a degree of coupling between an application and processing and configuration operations that are related to data collection.

In the present invention, for the first application, the first information of the first application may be obtained based on the application framework layer of the operating system, the application data collection configuration information may be queried based on the first information, to obtain the data collection configuration information of the first application, and the application data of the first application may be collected based on the data collection configuration information of the first application and the interface provided by the application framework layer of the operating system. For another application, for example, the second application, data may be collected in the foregoing manner. In the operating system, the application framework layer is used to manage various applications running at the application framework layer. Therefore, related information of the applications running at the application framework layer can be obtained based on the application framework layer. Moreover, application data of the applications is collected based on the interface provided by the application framework layer, and the interface is a system-level interface and does not depend on an application. Therefore, data of different applications can be collected based on the interface. In comparison with the prior art, different collection toolkits do not need to be customized for different applications, and the collection toolkits do not need to be integrated into the applications, thereby reducing a degree of coupling between the applications and processing and configuration operations that are related to data collection.

### BRIEF DESCRIPTION OF DRAWINGS

FIG. 1 is a schematic diagram of tightly coupling between an application and a collection toolkit in the prior art;
FIG. 2 is a schematic architectural diagram of a mobile operating system based on an Android platform according to an embodiment of the present invention;
FIG. 3 is a schematic diagram of a system architecture used for data collection according to an embodiment of the present invention;
FIG. 4 is a schematic diagram of a data collection procedure according to an embodiment of the present invention;
FIG. 5 is a schematic structural diagram of a data collection module according to an embodiment of the present invention;
FIG. 6 is a schematic diagram of a data collection process of a data collection unit according to an embodiment of the present invention;
FIG. 7 is a schematic diagram of a processing procedure of an application configuration management module according to an embodiment of the present invention;
FIG. 8 is a sequence diagram of data collection implemented by using an Android system as an example and based on an interface provided by an application framework layer according to an embodiment of the present invention;
FIG. 9 is a schematic diagram of content of application data collection configuration information according to an embodiment of the present invention;
FIG. 10 is a schematic diagram of a user interface of an application according to an embodiment of the present invention;
FIG. 11 is a schematic diagram of user interfaces before and after an application is updated according to an embodiment of the present invention;
FIG. 12 is a schematic diagram of application data collection configuration information before and after update according to an embodiment of the present invention;
FIG. 13 is a schematic structural diagram of a data collection apparatus according to an embodiment of the present invention; and
FIG. 14 is a schematic structural diagram of a data collection apparatus according to an embodiment of the present invention.

### DESCRIPTION OF EMBODIMENTS

To make the objectives, technical solutions, and advantages of the present invention clearer, the following further describes the present invention in detail with reference to the accompanying drawings. Apparently, the described embodiments are merely some rather than all of the embodiments of the present invention. All other embodiments obtained by persons of ordinary skill in the art based on the embodiments of the present invention without creative efforts shall fall within the protection scope of the present invention.

In the embodiments of the present invention, an application framework layer of an operating system of a terminal provides an application data collection interface. The interface is configured to provide a function of collecting data of an application running at the application framework layer of the operating system. When application data of an application is collected, the application data of the application is collected based on the interface. The interface is provided by the application framework layer of the operating system. Therefore, application data of different applications running at the application framework layer of the operating system can be obtained through collection based on the interface. In comparison with the prior art, different collection toolkits do not need to be customized for different applications, and the collection toolkits do not need to be integrated into the applications, thereby reducing a degree of coupling between the applications and processing and configuration operations that are related to data collection.

The terminal may include a plurality of types of terminals, for example, may include a mobile terminal such as a mobile phone, a PDA (Personal Digital Assistant, personal digital assistant), an intelligent terminal, an in-vehicle terminal, or an intelligent wearable device. The terminal herein is an electronic communications device that can run an application.

A type of the operating system used for the terminal is not limited in the embodiments of the present invention. For example, the operating system may be a mobile operating system based on an Android platform, or may be a mobile operating system based on a cloud platform (for example, a cloud operating system), or another operating system.

FIG. 2 is a schematic architectural diagram of a mobile operating system based on an Android platform. A software hierarchical structure of the mobile operating system is divided into the following several layers from bottom to top: first, an operating system (OS) layer, where the layer mainly includes an operating system kernel, for example, the layer may include various drivers (for example, a display driver and a flash memory driver) and power management; second, various libraries (Libraries) and Android runtime (Android RunTime); third, an application framework (Application Framework), where the layer may include various management services, for example, services such as an application manager (Activity Manager), a window manager (Windows Manager), a resource manager (Resource Manager), and a location manager (Location Manager); and fourth, an application (Application).

An application framework layer provides a plurality of types of application programming interfaces (Application Programming Interface, API for short) for an application developer, and is actually an application framework. An application at the higher layer is constructed by Java. Therefore, the APIs provided by this layer include various controls required in a user interface (User Interface, UI for short) program. For example, controls related to this embodiment of the present invention include view components (Views) such as a list (Lists), a grid (Grids), a text box (Text boxes), and a button (Buttons), or an embedded web browser. An application data collection interface in this embodiment of the present invention may be an interface based on the application framework layer. In other words, the application framework layer provides the application data collection interface.

Although the operating system based on the Android platform is used as an example for description above, similarly, for another type of operating system, an application framework layer of the operating system may also provide an application data collection interface configured to access an application.

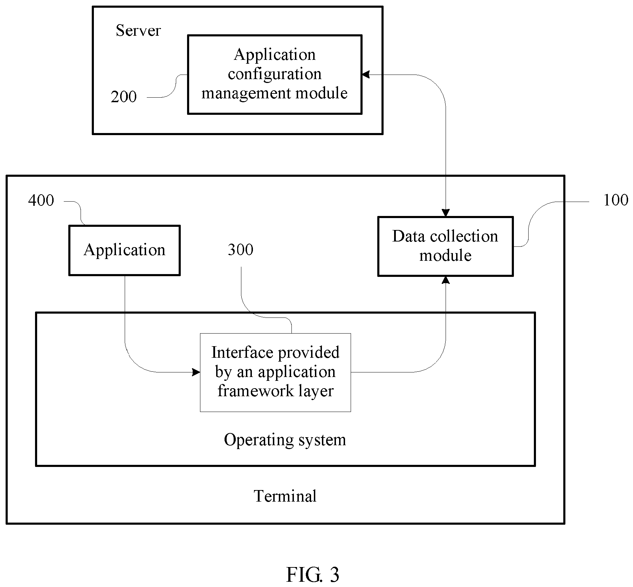

FIG. 3 is a schematic diagram of a system architecture used for data collection according to an embodiment of the present invention. As shown in the figure, the system architecture may include a data collection module 100, an application configuration management module 200, an interface 300 provided by an application framework layer, and an application 400. The application configuration management module 200 is an optional module.

The data collection module 100 and the interface 300 provided by the application framework layer are in a terminal, and the application configuration management module 200 is in a server. The terminal and the server may communicate with each other by using a network. The data collection module 100 in the terminal may communicate with the application configuration management module 200 in the server. The network may include a mobile network, for example, a cellular mobile communications network or a network using another mobile communication technology.

In this embodiment of the present invention, applications may run at an application framework layer provided by an operating system and have respective running space, and processes do not interfere with each other. However, a commonality is that the applications can be accessed by the interface 300 provided based on the application framework layer.

The application framework layer may provide a plurality of interfaces. The interfaces may include an interface provided by an existing system service (for example, an application manager) at the application framework layer, and further include a data collection interface provided in this embodiment of the present invention. The data collection interface is mainly configured to provide a function of collecting data of an application running at the application framework layer of the operating system. The data collection module 100 may obtain, based on the interface, application data generated by the application 400 in a running process (for example, application data of an online transaction application may include a type of a transaction object, a transaction value, and the like).

The application configuration management module 200 may provide data collection configuration information for the data collection module 100, so that the data collection module 100 collects the application data of the application based on the data collection configuration information. The data collection configuration information is used to define an application whose data needs to be collected, and/or which application data needs to be collected for the application whose data needs to be collected.

The interface 300 provided by the application framework layer may be installed in the terminal as a part of the operating system when the operating system is installed. The data collection module 100 may be installed as an independent application (for example, may be a system application) or an independent service (for example, a system service), and may configure the data collection configuration information in an installation process. The data collection configuration information may be used as a constituent part of an installation package of the data collection module 100, and configured in the installation process of the data collection module 100. Alternatively, when being installed or after being installed, the data collection module 100 may obtain and configure the data collection configuration information by interacting with the application configuration management module 200 in the server.

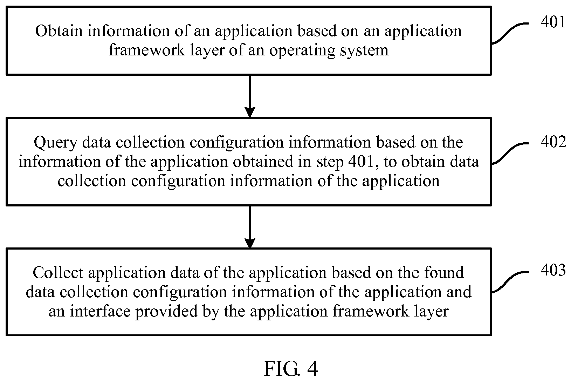

Based on the foregoing system architecture, FIG. 4 shows a data collection procedure according to an embodiment of the present invention. The procedure is performed by a data collection module, and the procedure includes not only but also the following steps.

Step 401: Obtain first information of a first application based on an application framework layer of an operating system.

In this step, an application manager at the application framework layer of the operating system may send the first information of the first application to the data collection module when the first application is activated. The application manager may manage a life cycle of an application, a status of the application, and the like, and may provide a plurality of interfaces configured to implement an application management function. The application management function may be implemented by invoking methods provided by these interfaces. For example, when the first application invokes a reloading method (such as an onResume method) provided by the application manager, the application manager may determine that the first application is activated, and further send the first information of the first application to the data collection module.

The first information is used to identify the first application. As identification information of an application, the first information includes at least the identification information of the first application. The identification information is used to uniquely identify an application. For example, the identification information may be a package name, a uniform resource identifier (Uniform Resource Identifier, URI for short), or a corresponding process name of the application (usually, one application corresponds to one process). One application may include a plurality of threads. Therefore, the first information may further include a thread name of the first application. A video play application is used as an example. The application may include a music play thread and a music download thread. When the music play thread is activated, the application manager may obtain a package name of the application and a name of the music play thread, and send the package name and the name of the music play thread to the data collection module.

Step 402: Query data collection configuration information based on the first information of the first application obtained in step 401, to obtain data collection configuration information of the first application.

The data collection configuration information may define applications whose data needs to be collected, and may further separately define, for these applications whose data needs to be collected, data that needs to be collected (for ease of description, the data that needs to be collected is referred to as a data collection item below). The data collection configuration information may also define only the data collection item. This may be applied to a case in which it is considered by default that data of one type of application or some types of applications or all applications needs to be collected. The data collection item is used to specify the data that needs to be collected. Specifically, the data that needs to be collected may be specified by defining a collection manner or defining a data type, and the data that needs to be collected is collected based on the defined collection manner or the defined data type. A data collection item may be understood as an information set used to describe a related attribute of collected data. Based on a collection manner used for the data collection item (for example, whether to collect control-based data or collect tag data in a markup language on a web page), the data collection item may include one or more of the following information:
a control-based data collection item: control name; and
a tag-based data collection item: tag name.

For example, for a video playback application, if a movie name displayed in a video play user interface needs to be collected, and in the user interface, the movie name is displayed by a text box control named "video_name", a data collection item corresponding to the video playback application includes the name "video name" of the text box control. For another example, for a news reading application, if a news title displayed on a page needs to be collected, and the news title is displayed in an <h1> tag (the <h1> tag is used to display a news title, for example, <h1> abc </h1>, where abc represents a text of the news title) in a markup language source code (an HTML language is used as an example herein) on the page, a data collection item corresponding to the news reading application includes the <h1> tag.

The applications whose data needs to be collected may be in a form of an application list. The list includes identification information of an application, for example, one or more of information used to identify the application such as a package name or a URI of the application, a corresponding process name of the application, a class name of a class to which the application belongs, and version information of the application. Data of all the applications in the list needs to be collected. In the data collection configuration information, a data collection item may be defined for each application or each type of application whose data needs to be collected, and may be defined in a manner of a data collection item list or a data collection item template. The data collection item list or the data collection item template defines related configuration information of one or more data items that need to be collected.

During specific implementation, one data collection item template may be defined for one type of application. Applications of a same type usually have a similar data collection requirement, and therefore data that needs to be collected also has a same or similar attribute (for example, for all online transaction applications, transaction values and transaction times need to be collected). Therefore, one data collection item template may be defined for the applications of a same type and used to collect data of the applications of such a type.

For example, the data collection item may include one or more of the following configuration information:
one or more of a name, a type, and a corresponding object name of the application control, or a corresponding instruction used to access a control or an object, where when a data collection interface is invoked, application data of an application may be obtained based on the configuration information by using a method that is in the interface and that is for obtaining corresponding control data; and
one or more of a tag name or a tag type that are used in a markup language on a web page, where when the data collection interface is invoked, application data of these tags may be obtained based on the configuration information by using a method that is in the interface and that is for obtaining corresponding tag data in a corresponding web page object.

Step 403: Collect application data of the first application based on the found data collection configuration information of the first application and through an interface provided by the application framework layer.

When this step is specifically implemented, the data collection module may first query an application list based on the package name of the application obtained in step 401; query a data collection item template corresponding to the application if the package name exists in the application list, to obtain a control name or a tag name; and then invoke, based on the data collection interface, the method that is in the interface and that is for obtaining data in a corresponding control or object, to obtain the application data of the application. Further, when the application list is queried based on the package name of the application obtained in step 401, if the package name does not exist in the application list, it indicates that data of the application does not need to be collected, and a data collection operation for the application is abandoned.

Further, after step 403, the collected application data may be uploaded to a server, or the collected application data may be stored into a local database. The collected application data may include some user information (for example, user account information and user online transaction information). Therefore, for the sake of security, the collected application data may be stored into a local terminal. To further improve security, before the application data is stored into the database, the application data may be encrypted.

Further, after step 403, the collected application data may be classified based on an attribute class to which the collected application data belongs. In this way, application data from different applications may be classified into a corresponding class based on an attribute of the application data, to reflect an attribute feature of a user based on application data of a plurality of applications. In this case, not only obtained user features are more comprehensive and accurate, but also the application data is stored more appropriately and is more convenient for query and use. Further, the classified application data may be stored into the database of the terminal. For an application whose data needs to be collected, some corresponding application data attribute classes may be set based on a type to which a service performed by the application belongs or may set in combination with a use requirement of application data (for example, whether the application data is used to analyze a user preference, or used to analyze transaction behavior of a user). For example, an application data attribute class may include but is not limited to a device attribute (for example, information of this class may include related information of a device or an operating system), a basic user attribute of the user (for example, information of this class may include user information such as a gender and an age), an operation behavior attribute of the user (for example, information of this class may include a time, a frequency, and the like for using the application by the user), a user preference attribute (for example, information of this class may include sports, entertainment, and the like preferred by the user), and a transaction attribute of the user (for example, information of this class may include online shopping information of the user such as a commodity type and a transaction value). Details are not listed one by one herein.

Further, the terminal further receives data collection configuration information sent by the server, and update the data collection configuration information in the terminal based on the received data collection configuration information. During specific implementation, the terminal may receive the data collection configuration information actively pushed by the server. The server may regularly or irregularly push the data collection configuration information, or push the data collection configuration information when the application or the operating system is updated.

The terminal actively requests to obtain the data collection configuration information. Specifically, when an application is updated, the terminal sends an obtaining request for data collection configuration information of the updated application to the server, and receives the data collection configuration information returned by the server based on the obtaining request.

Only a process of collecting the application data of the first application is described above. For another application running at the application framework layer, for example, a second application, data of the application can also be collected in the foregoing manner.

It can be learned from the foregoing descriptions that in this embodiment of the present invention, based on the interface provided by the application framework layer, not only information of a plurality of applications running at the application framework layer of the operating system may be obtained, but also application data of a corresponding application may be obtained. In comparison with the prior art, different collection toolkits do not need to be customized for different applications, and the collection toolkits do not need to be integrated into the applications, thereby reducing a degree of coupling between the applications and processing and configuration operations that are related to data collection.

An effect and a function of each function module in the foregoing architecture in the foregoing procedure is described below in detail with reference to the accompanying drawings.

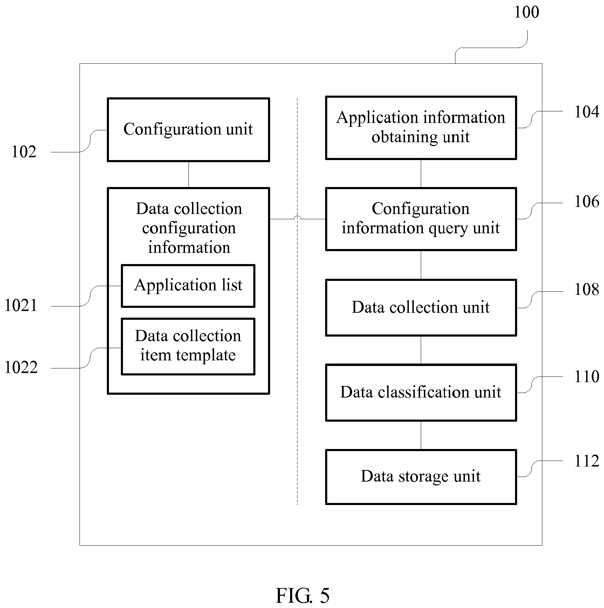

FIG. 5 is a schematic structural diagram of an example of a data collection module 100. As shown in the figure, the data collection module 100 may include the following function units: a configuration unit 102, an application information obtaining unit 104, a configuration information query unit 106, a data collection unit 108, a data classification unit 110, and a data storage unit 112. The data classification unit 110 and the data storage unit 112 are optional units.

After installation of the data collection module 100 is completed, the configuration unit 102 is triggered to perform an operation of configuring data collection configuration information, for example, an operation of initializing an application list 1021 and/or a data collection item template 1022.

After an application is started or activated, the application information obtaining unit 104 is started, and obtains a package name and a current thread name of the application by using an interface 300 provided by an application framework layer. The configuration information query unit 106 queries the application list 1021 based on the package name and the current thread name of the application that are obtained by the application information obtaining unit 104. If the application exists in the application list 1021, it indicates that data of the application needs to be collected; or if the application does not exist in the application list 1021, it indicates that data of the application does not need to be collected. If the data of the application needs to be collected, the configuration information query unit 106 queries a data collection item template of the application from the data collection item template 1022. The data collection unit 108 collects corresponding application data based on the data collection item template found by the configuration information query unit 106 and the interface 300 provided by the application framework layer (for example, a data collection interface in the provided interface). The data classification unit 110 classifies the data collected by the data collection unit 108. The data storage unit 112 stores the classified data into a database.

A data collection initialization operation may be completed in a process of installing an operating system. The data collection initialization operation mainly includes configuring the application list 1021 and/or the data collection item template 1022. The application list 1021 and the data collection item template 1022 may be preset in an installation package of the operating system, or may be obtained from a server, and may be further updated by the server after installation of the operating system is completed. For example, when an application is installed, an application is uninstalled, or an application is updated on a terminal, if the application exists in the application list 1021, an application configuration management module 200 may push data collection configuration information to the terminal, and the configuration unit 102 in the terminal updates the data collection configuration information in the terminal based on the received data collection configuration information.

The application list 1021 may include identification information of an application whose data needs to be collected. A data format used for the application list 1021 may be a key-value pair (<KEY, VALUE>), for example, <xx manager, com.gtgj.view>, where "xx manager" is a name of an application, and "com.gtgj.view" is a URI of the application.

The data collection item template 1022 is mainly used to set specific content, of an application, that needs to be collected. For example, the to-be-collected content may include application control data and application tag data, and each piece of data may be stored in a JSON format.

The application information obtaining module 104 may obtain, by using the interface 300 provided by the application framework layer, application information of a process that is in an active state currently. The application information includes a package name, a URI, a thread name, a class name, version information, and the like of the application.

The configuration information query unit 106 queries the application list 1021 based on the package name, the URI, the class name, the version information, and the like of the application that are obtained by the application information obtaining unit 104, to determine whether data of the application needs to be collected. If the current application does not exist in the application list 1021, the data of the application does not need to be collected; or if the current application exists in the application list, the data of the application needs to be collected. If the data of the application does not need to be collected, the configuration information query unit 106 directly filters the application, and no longer performs a subsequent processing step. If the data of the application needs to be collected, the configuration information query unit 106 queries a data collection item template of the application based on the data collection item template 1022, and outputs the data collection item template 1022 of the application to the data collection unit 108. The data collection item template 1022 may define application data in two formats. A first one is a basic application control data format provided based on the operating system, and a second one is application tag data, provided based on the operating system, of a web page type. For data in the first format, an Android operating system is used as an example. An application control corresponding to the Android operating system includes but is not limited to TextView (a text view control), EditText (a text edit control), Button (a button control), CheckBox (a checkbox control), Video View (a video play control), and the like. The data in the format exists as an object in the system. In other words, application data may be obtained by using a Get method for invoking a control object. Data in the second format is web page data focusing on WebView (WebView). A specific format may be a string including an HTML (Hypertext Markup Language, Hypertext Markup Language) tag and including application data. The data collection item template 1022 defines configurations corresponding to the foregoing two data formats.

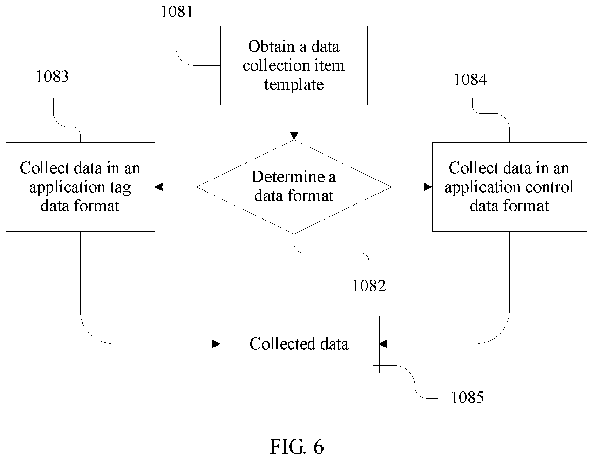

The data collection unit 108 is configured to select final application data. FIG. 6 shows an example of a data collection process of the data collection unit 108. As shown in the figure, in step 1081, the data collection unit 108 obtains the data collection item template 1022. In step 1082, the data collection unit 108 determines, based on the data collection item template 1022, a format of data that needs to be collected. If the data format is the application tag data format, step 1083 is to be performed. If the data format is the application control data format, step 1084 is to be performed. In step 1083, the data collection unit 108 collects application data in the application tag data format based on the data collection item template. Specifically, the data in the application tag data format is encapsulated in a form of an object, and may be collected based on an object identifier defined in the data collection item template and by directly invoking a method, used for the object, in the interface 300 provided by the application framework layer. In step 1084, the data collection unit collects application data in the application control data format based on the data collection item template. Specifically, the data in the application control data format is presented as a string, and may be obtained through data matching based on a regular expression defined in the data collection item template. Certainly, the data collection item template may define data in a plurality of formats. For example, the foregoing two data formats may be defined. In this case, data in a plurality of data formats may be obtained in step 1085 based on step 1083 and step 1084.

The data classification unit 110 may classify the application data collected by the data collection unit 108. Data of a plurality of applications may be gathered to reflect a user attribute feature, to further provide a data sharing service for terminals. Table 1 shows an example of a classification class.

**Table 1 Classification class of application data**

| Sequence number | Data type (including but not limited to) | Data content (including but not limited to) |
|---|---|---|
| 1 | Data of an intelligent terminal device | Mobile phone number, operator, system version, IMEI, and the like |
| 2 | Basic data of an intelligent terminal user | Gender, birthday, marital status, education level, monthly average income, monthly average consumption, income breakdown, consumption breakdown, constellation, actual name, nickname, data traffic volume, user email, user tag, and the like |
| 3 | Family and work information of an intelligent terminal user | Home address, company address, company name, and the like |
| 4 | Bank information of an intelligent terminal user | Customer of a bank used by the user, credit card of the bank used by the user |
| 5 | Work and rest time of an intelligent terminal user | Get-up time, sleeping time, time for leaving home, time for returning home, time for leaving company, and time for arriving at company |
| 6 | Sport participated in by an intelligent terminal user | Basketball, football, badminton, ping-pong, tennis, swimming, mountaineering, bicycling, fitness, and the like |
| 7 | Food preferred by an intelligent terminal user | Buffet, hot pot, Japanese and Korean cuisine, seafood, and the like |
| 8 | Leisure and entertainment information of an intelligent terminal user | KTV, board game and video game, pedicure and massage, hot spring bath, life cultivation and health preservation, and the like |
| 9 | Music preferred by an intelligent terminal user | Singer, song, music type, and the like |
| 10 | Movie and TV series preferred by an intelligent terminal user | Movie star, traced TV series, viewing habit, movie type, and the like |
| 11 | Shopping information of an | Commodity type, commodity brand, commodity |
| | intelligent terminal user | price, and the like |
| 12 | Read information of an intelligent terminal user | Book type, reading time, and the like |
| 13 | Location frequently visited by an intelligent terminal user | Frequently visited location type, resident city name, and the like |
| 14 | Travel information of an intelligent terminal user | Travel transportation, hotel brand, hotel rating, and the like |
| 15 | Application use habit of an intelligent terminal user | Use frequency, use time, application used in a regular time, application used at a regular location, and the like |

In Table 1, the data of the intelligent terminal device belongs to an attribute class of the terminal device, the basic data of the intelligent terminal user belongs to a basic attribute class of the user, the work and rest time of the intelligent terminal user, the food preferred by the intelligent terminal user, and the like belong to a preference attribute class of the user, the application use habit of the intelligent terminal user belongs to an operation behavior attribute class of the user, the shopping information of the intelligent terminal user belongs to a transaction attribute class of the user, and so on. Details are not listed one by one herein.

The data storage unit 112 may store all the collected application data into an encrypted database in the operating system by class, that is, may not report the collected application to the server.

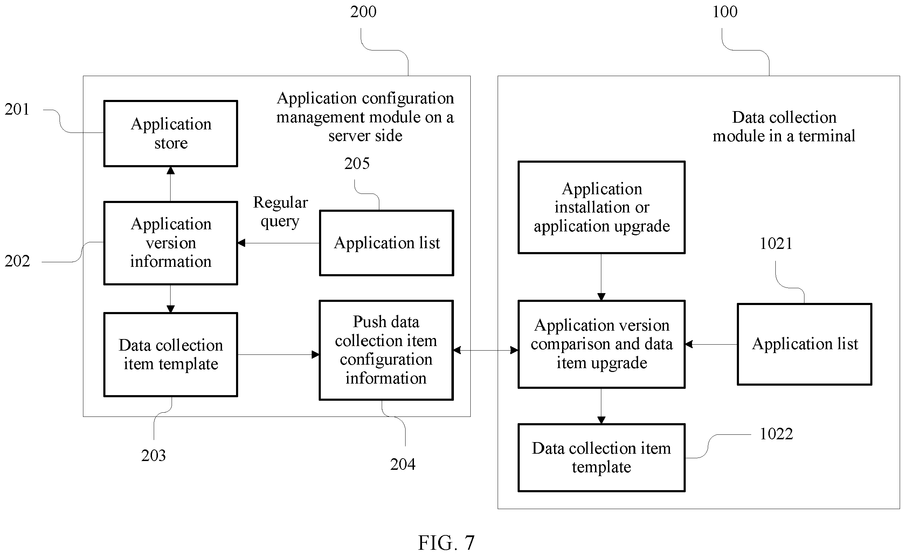

FIG. 7 shows an example of a processing procedure of an application configuration management module 200 in a server. The module is configured to manage data collection configuration information in a terminal. The application configuration management module 200 may regularly query application version information 202 based on an application list 206, compares the version information 202 with an application version in an application store 201, and updates a data collection item template 203 if the version is later than that in the application list 206.

On the terminal side, when a user upgrades an application, the terminal determines whether the application exists in an application list 1021, and compares version information of the application with an upgrade version if the application exists in the application list 1021. If the upgrade version is later than a version in the application list 1021, the terminal requests the application configuration management module 200 to push a data collection item template, and updates the data collection item template of the application to a data collection item template 1022. If the user installs a new application, the terminal determines whether the application exists in the application list 1021. If the application exists in the application list 1021, the terminal directly requests the application configuration management module 200 to push a data collection item template in step 204, and adds the data collection item of the application to the data collection item template 1022.

During specific application, a system-level data collection solution is considered to be used on the terminal, and to-be-collected objects are all third-party applications based on the terminal. A collection toolkit does not need to be independently integrated into each application. Collected content of each application is managed by using same data collection configuration information (in a form of a configuration file). To update an application, only a corresponding configuration file needs to be updated. Collected data is stored into a local encrypted database, instead of being uploaded to the server, to protect user data security.

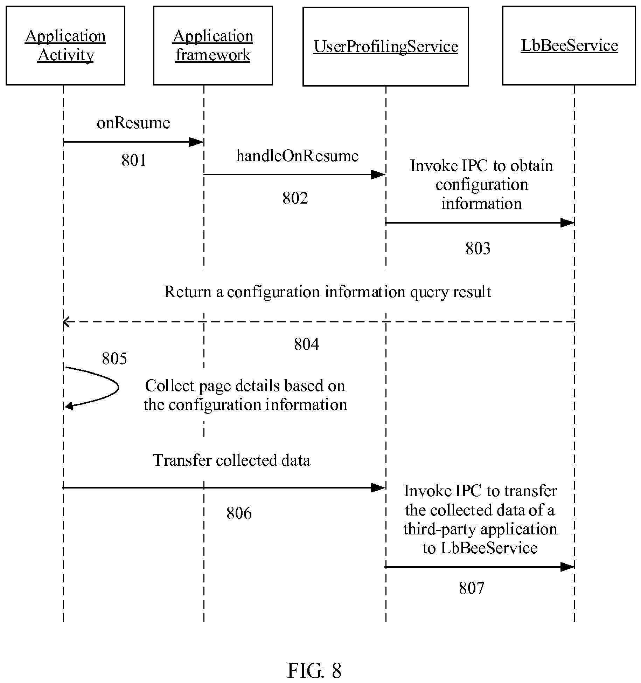

FIG. 8 is an example of an operation sequence diagram of data collection performed by using an Android system as an example and based on an interface provided by an application framework layer. In the Android system, an application exists in a form of Activity. In this example, the application framework layer is represented as a framework. A data collection module may be represented as a system service (referred to as UserProfilingService in this example). LbBeeService is a system service used for data access and storage. Based on the LbBeeService, the UserProfilingService may obtain data collection configuration information and store collected application data. In step 801 and step 802, a status of the Activity changes to a running state (or referred to as an activated state, where in the state, a user interface corresponding to the Activity is visible to a user, and can respond to a user operation) by invoking an onResume method. After determining that the status of the Activity changes to the running state, the framework sends a related handle (represented as handleOnResume in the figure) to the UserProfilingService, to notify the UserProfilingService of information that the Activity changes to the running state. The UserProfilingService may obtain, based on the handle, related information of the Activity, such as a process name (or a package name) and a thread name (or a class name). In step 803 and step 804, after receiving the handle, the UserProfilingService obtains, through interprocess communication, a corresponding data collection item based on the LbBeeService, and then returns the data collection item to the Activity. In step 805 to step 807, the Activity collects data based on the data collection item, transfers the collected data to the UserProfilingService; and the UserProfilingService transfers, through interprocess communication, the collected data to the LbBeeService for storage.

In an alternative embodiment of the foregoing embodiment, after receiving an information notification that the Activity changes to the running state and obtaining the data collection item of the application, the UserProfilingService may invoke a data collection interface based on the interface provided by the framework and the obtained data collection item, to obtain application data of the Activity by using a data obtaining method provided by the interface. In a process of performing the data obtaining method, the Activity may collect data based on the data collection item, and transfer the collected data to the UserProfilingService; and the UserProfilingService transfers, through interprocess communication, the collected data to the LbBeeService for storage.

To understand the foregoing embodiment of the present invention more clearly, descriptions are provided below with reference to specific application scenarios.

### Scenario 1

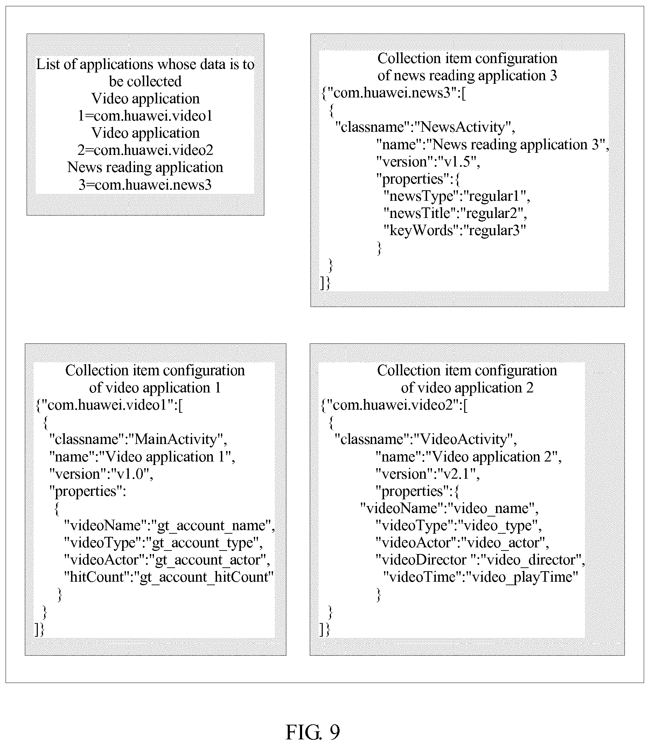

Collection of information about a movie star preferred by a user is used as an example to describe the data collection procedure provided in the embodiment of the present invention. In this example, as shown in FIG. 9, an application list [a video application 1, a video application 2, and a news reading application 3] is set in data collection configuration information, and a data collection item template is configured for each of these applications. Content that is defined in a data collection item template of the video application 1 and that needs to be collected includes a movie name (videoName), a movie type (videoType), a lead actor of a movie (videoActor), and a hit count of the movie (hitCount). Content that is defined in a data collection item template of the video application 2 and that needs to be collected includes a movie name (videoName), a movie type (videoType), a lead actor of a movie (videoActor), a director of the movie (videoDirector), and a movie time (videoTime). Content that is defined in a data collection item template of the news reading application 3 and that needs to be collected includes a news type (newsType), a news title (newsTitle), and a news keyword (keyWords). Data collection items defined in the data collection item templates of the video application 1 and the video application 2 are data items of a control type. FIG. 9 shows a control name corresponding to each data collection item. For example, a control name corresponding to the data collection item videoName of the video application 1 is gt_account_name. Data collection items defined in the data collection item template of the news reading application 3 are data items of a tag type. FIG. 9 shows a tag name corresponding to each data collection item. For example, a tag name corresponding to the data collection item newsType of the news reading application 3 is regular1.

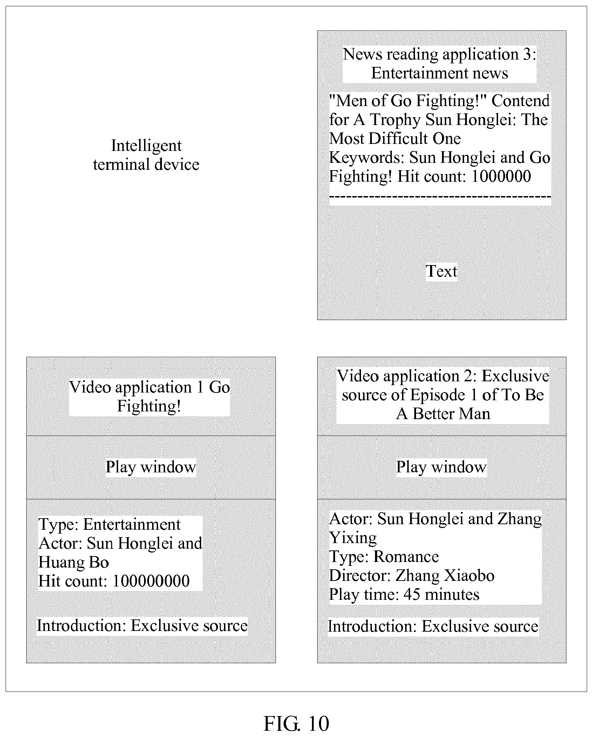

In this example, cases in which a user uses the video application 1, the video application 2, and the news reading application 3 are listed. FIG. 10 shows content displayed in user interfaces of the three applications:
When the user uses the video application 1 in a terminal, the user enters a viewing page to watch a movie named Go Fighting!. In this case, a process of the application is in a running state, a data collection module obtains a package name and a current page class name of the video application 1 based on an application manager at an application framework layer. The data collection module determines, by using an application list 1021 and a data collection item template 1022, that data on the current page of the application needs to be collected. A correspondence between the data on the current page of the video application 1 and a data collection instruction defined in the data collection item template is shown in Table 2:

**Table 2**

| Application name | Data on the current page of the application | Data collection item |
|---|---|---|
| Video application 1 | Go Fighting! | gt account name (an instruction used to collect a movie name) |
| | Entertainment | gt account actor (an instruction used to |
| | | collect a movie type) |
| | Sun Honglei and Huang Bo | gt_account_actor (an instruction used to collect a lead actor of a movie) |
| | 100000000 | gt_account_hitCount (an instruction used to collect a hit count) |

The data collection module extracts {"videoName":"Go Fighting!", "videoType":"Entertainment", "videoActor":"Sun Honglei and Huang Bo", "hitCount":"100000000"} by invoking a control object data obtaining method in an interface provided by the application framework layer, so that the following application control data may be collected on the current viewing page: [movie namc=Go Fighting!], [movie typc=Entcrtainmcnt], [lead actor of the movic=Sun Honglei and Huang Bo], and [hit count=100000000]. The data collection module may store the foregoing extracted formatted data into a corresponding data table by class. The user uses the video application 2 to watch a movie named To Be A Better Man. The following application control data may be collected on a current viewing page by using the method provided in this embodiment of the present invention: [movie name=To Be A Better Man], [movie type=Romance], [lead actor of the movie=Sun Honglei and Zhang Yixing], [director of the movie=Zhang Xiaobo], and [play time=45 minutes].

The user uses the news reading application 3 to read a piece of entertainment news. The following application tag data may be collected on a current reading page by using the method provided in this embodiment of the present invention: [news type=entertainment news], [news title="Men of Go Fighting!" Contend for A Trophy Sun Honglei: The Most Difficult One], [keywords=Sun Honglei and Go Fighting!].

In the foregoing cases, content displayed in the user interfaces of the applications and collected content defined in the data collection item templates may be shown in the following Table 3:

**Table 3**

| Application name | Data on the current page of the application | Data collection item |
|---|---|---|
| Video application 1 | Go Fighting! | videoName (movie name) |
| | Entertainment | videoType (movie type) |
| | Sun Honglei and Huang Bo | videoActor (lead actor of the movie) |
| | 100000000 | hitCount (hit count of the movie) |
| Video application 2 | To Be A Better Man | videoName (movie name) |
| | Romance | videoType (movie type) |
| | Sun Honglei and Zhang Yixing | videoActor (lead actor of the movie) |
| | Zhang Xiaobo | videoDirector (director of the movie) |
| | 45 minutes | videoTime (movie time) |
| News reading application 3 | Entertainment news | newsType (news type) |
| | "Men of Go Fighting!" Contend for A Trophy Sun Honglei: The Most Difficult One | newsTitle (news title) |
| | Sun Honglei and Go Fighting! | keyWords (news keywords) |

### Scenario 2

A version upgrade operation for a third-party application on a terminal may be performed frequently. Based on the data collection method in this embodiment of the present invention, when a version of an application is upgraded, only latest data collection configuration information (which may exist in a form of a configuration file) needs to be pushed to the terminal. Updating a version of a video application 1 is used as an example. An application configuration management module 200 in a server may regularly query a version number of the video application 1 in an application store, marks the application if the application configuration management module 200 finds that the version number of the video application 1 in the application store is inconsistent with a version number of that installed in the terminal, and notifies a developer that data collection configuration information of the video application 1 needs to be updated. After comparing the two versions, the developer further writes a data collection item of the video application 1 into a configuration file. When upgrading the video application 1, the terminal compares an application list 1021 in the terminal, and if the terminal finds that the version numbers are inconsistent, the terminal requests the server to push data collection configuration information, and the server pushes new data collection configuration information to the terminal.

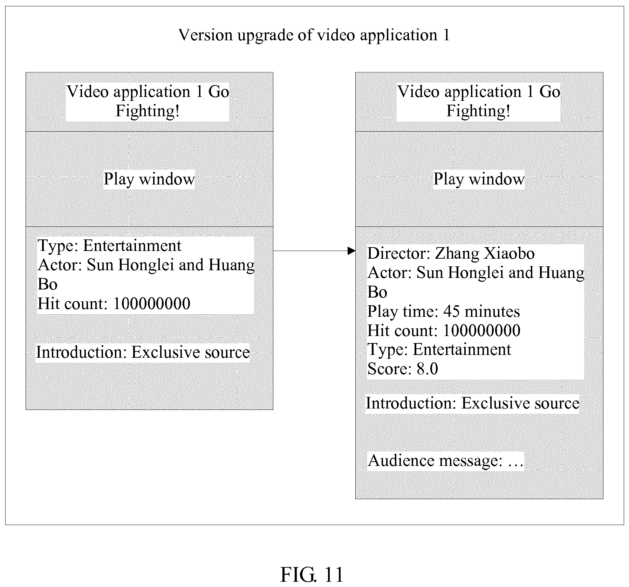

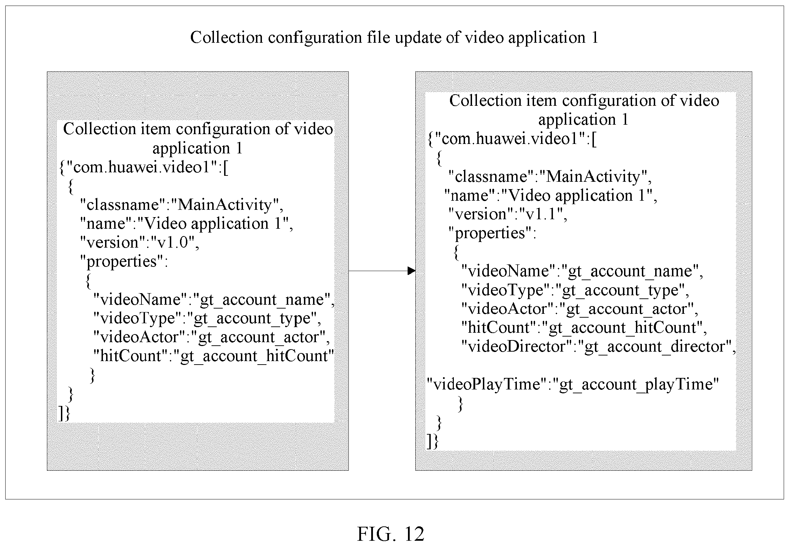

FIG. 11 is a schematic diagram of video play interfaces before and after the version of the video application 1 is updated. After the video application is updated, the following displayed content is added to a video template interface of the video application: a director, a play time, a score, and an audience message. Correspondingly, the following data items that need to be collected may be added to a data collection item: the director, the play time, the score, and the audience message. Correspondingly, FIG. 12 shows content of a data collection configuration file before and after the version of the video application 1 is updated. It may be learned that after the version is updated, new data collection items are added to the configuration file, to indicate that the director and the play time in a user interface need to be collected.

Based on a same technical concept, an embodiment of the present invention further provides a data collection apparatus.

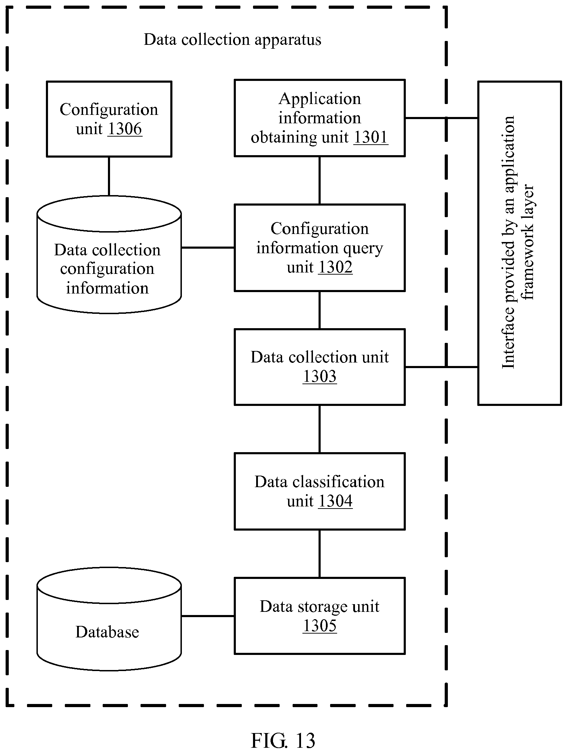

FIG. 13 is a schematic structural diagram of a data collection apparatus according to an embodiment of the present invention. The apparatus implements the data collection procedure described in the foregoing embodiment. The apparatus includes an application information obtaining unit 1301, a configuration information query unit 1302, a data collection unit 1303, and further includes one or more of a data classification unit 1304, a data storage unit 1305, or a configuration unit 1306.

The application information obtaining unit 1301 is configured to: obtain first information of a first application based on an application framework layer of an operating system, and obtain second information of a second application based on the application framework layer of the operating system.

The configuration information query unit 1302 is configured to: query application data collection configuration information based on the first information, to obtain data collection configuration information of the first application, and query the application data collection configuration information based on the second information, to obtain data collection configuration information of the second application, where the first information is used to identify the first application, and the second information is used to identify the second application.

The data collection unit 1303 is configured to: collect application data of the first application based on the data collection configuration information of the first application and through an interface provided by the application framework layer of the operating system, and collect application data of the second application based on the data collection configuration information of the second application and the interface provided by the application framework layer of the operating system.

The application information obtaining unit 1301 is specifically configured to: receive the first information sent by an application manager at the application framework layer, where the first information is sent by the application manager when the first application is activated; and receive the second information sent by the application manager at the application framework layer, where the second information is sent by the application manager when the second application is activated.

Optionally, when the first application invokes a reloading method, the application manager determines that the first application is activated. When a process of the second application invokes the reloading method, the application manager determines that the second application is activated.

Optionally, the first information includes one or more of the following information: a package name of the first application, a uniform resource identifier URI of the first application, a corresponding process name of the first application, and a version of the first application. The second information includes one or more of the following information: a package name of the second application, a URI of the second application, a corresponding process name of the second application, and a version of the second application.

Optionally, the first information further includes a class name or a thread name of the first application, and the second information further includes a class name or a thread name of the second application.

Optionally, the application data collection configuration information includes a configured list of applications whose data needs to be collected, and data collection item configuration information of an application whose data needs to be collected, where data collection item configuration information of an application is used to define which application data of the application is to be collected.

Optionally, the data collection item configuration information includes one or more of the following information: one or more of a name, a type, or a corresponding object name of an application control; and one or more of a tag name or a tag type that are used in a markup language on a web page.

Optionally, the data storage unit 1305 is configured to: store the collected application data of the first application into a local database after the data collection unit collects the application data of the first application, and store the collected application data of the second application into the local database after the data collection unit collects the application data of the second application.

Optionally, the data classification unit 1304 is configured to: before the data storage unit stores the collected application data of the first application into the local database, classify the collected data of the first application based on an attribute class to which the collected data of the first application belongs; and before the data storage unit stores the collected application data of the second application into the local database, classify the collected data of the second application based on an attribute class to which the collected data of the second application belongs.

The configuration unit 1306 is configured to: send an obtaining request to a server when it is determined, based on the framework layer of the operating system, that an application is updated, where the obtaining request is used to request to obtain data collection configuration information of the updated application; and receive the data collection configuration information returned by the server based on the obtaining request.

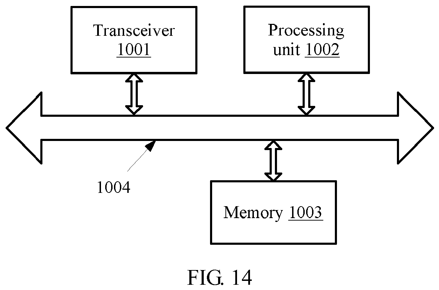

FIG. 14 is a schematic structural diagram of a data collection apparatus according to an embodiment of the present invention. The apparatus may implement the data collection procedure described in the foregoing embodiment. The apparatus may include a transceiver 1001, a processing unit 1002, and a memory 1003.

The processing unit 1002 is configured to control an operation of the apparatus, including data transmission (including receiving and/or sending) performed by using the transceiver 1001. The memory 1003 may include a read-only memory and a random access memory, and is configured to provide an instruction and data for the processing unit 1002. A part of the memory 1003 may further include a nonvolatile random access memory (NVRAM). Components of the apparatus are coupled together by using a bus system. In addition to a data bus, the bus system 1004 includes a power bus, a control bus, and a status signal bus. However, for ease of clear description, all buses in the figure are denoted as the bus system 1004.

The procedure disclosed in the embodiments of this application may be applied to the processing unit 1002 or implemented by the processing unit 1002. In an implementation process, steps of the procedure implemented by the apparatus may be implemented by using an integrated logic circuit of hardware in the processing unit 1002 or by using an instruction in a form of software. The processing unit 1002 may be a general purpose processor, a digital signal processor, an application-specific integrated circuit, a field programmable gate array or another programmable logic device, a discrete gate or a transistor logic device, or a discrete hardware component, and may implement or perform the methods, the steps, and the logical block diagrams that are disclosed in the embodiments of this application. The general purpose processor may be a microprocessor, or may be any conventional processor or the like. The steps of the methods disclosed with reference to the embodiments of this application may be directly performed and completed by a hardware processor, or may be performed and completed by a combination of hardware and software modules in the processor. The software module may be located in a mature storage medium in the art, such as a random access memory, a flash memory, a read-only memory, a programmable read-only memory, an electrically erasable programmable memory, or a register. The storage medium is located in the memory 1003. The processing unit 1002 reads information in the memory 1003 and implements the steps of the procedures indicated in the embodiments of the present invention in combination with the hardware of the processing unit 1002.

Specifically, the processing unit 1002 may be configured to perform the data collection procedure in the foregoing embodiment.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams, and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or a processor of the another programmable data processing device generate an apparatus for implementing a specific function in one or more processes in the flowcharts and/or in one or more blocks in the block diagrams.

These computer program instructions may be stored in a computer readable memory that can instruct the computer or another programmable data processing device to work in a specific manner, so that the instructions stored in the computer readable memory generate an artifact that includes an instruction apparatus. The instruction apparatus implements a specified function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some embodiments of the present invention have been described, persons skilled in the art can make changes and modifications to these embodiments once they learn the basic inventive concept. Therefore, the following claims are intended to be construed as to cover the preferred embodiments and all changes and modifications falling within the scope of the present invention.

Obviously, persons skilled in the art can make various modifications and variations to the present invention without departing from the scope of the present invention. The present invention is intended to cover these modifications and variations provided that they fall within the scope of protection defined by the following claims.

## Claims

1. A data collection method, comprising:
obtaining (401), by a data collection module (100) of a terminal, first information of a first application running on the terminal based on an application framework layer of an operating system of the terminal, querying (402), by the data collection module (100), application data collection configuration information based on the first information, to obtain data collection configuration information of the first application, and collecting (403), by the data collection module (100), application data of the first application based on the data collection configuration information of the first application and through an interface (300) of the terminal provided by the application framework layer of the operating system, wherein the first information is used to identify the first application; and
obtaining (401), by the data collection module (100), second information of a second application running on the terminal based on the application framework layer of the operating system, querying (402), by the data collection module (100), the application data collection configuration information based on the second information, to obtain data collection configuration information of the second application, and collecting (403), by the data collection module (100), application data of the second application based on the data collection configuration information of the second application and the interface provided by the application framework layer of the operating system, wherein the second information is used to identify the second application,
wherein
the obtaining (401), by the data collection module (100), the first information of the first application based on the application framework layer of the operating system comprises:
receiving, by the data collection module (100), the first information sent by an application manager at the application framework layer, wherein the first information is sent by the application manager when the first application is activated; and
the obtaining (401), by the data collection module (100), the second information of the second application based on the application framework layer of the operating system comprises:
sending, by the application manager at the application framework layer of the operating system, the second information of the second application when the second application is activated, and receiving, by the data collection module (100), the second information sent by the application manager,
the method further comprises:
sending, by the configuration unit (102), an obtaining request to a server when it is determined, based on the framework layer of the operating system, that an application is updated, wherein the obtaining request is used to request to obtain data collection configuration information of the updated application; and
receiving, by the configuration unit (102), the data collection configuration information returned by the server based on the obtaining request.

2. The method according to claim 1, wherein when the first application invokes a reloading method, the application manager determines that the first application is activated; and
when a process of the second application invokes the reloading method, the application manager determines that the second application is activated.

3. The method according to any one of claims 1 or 2, wherein the first information comprises one or more of the following information: a package name of the first application, a uniform resource identifier, URI, of the first application, a corresponding process name of the first application, or a version of the first application; and
the second information comprises one or more of the following information: a package name of the second application, a URI of the second application, a corresponding process name of the second application, and a version of the second application.

4. The method according to claim 3, wherein the first information further comprises a class name or a thread name of the first application; and
the second information further comprises a class name or a thread name of the second application.

5. The method according to any one of claims 1 to 4, wherein the application data collection configuration information comprises:
a configured list of applications whose data needs to be collected; and
data collection item configuration information of an application whose data needs to be collected, wherein data collection item configuration information of an application is used to define which application data of the application is to be collected.

6. The method according to claim 5, wherein the data collection item configuration information comprises one or more of the following information:
one or more of a name, a type, or a corresponding object name of an application control; and
one or more of a tag name or a tag type that are used in a markup language on a web page.

7. The method according to any one of claims 1 to 6, wherein
after the collecting application data of the first application, the method further comprises: storing the collected application data of the first application into a local database; and
after the collecting application data of the second application, the method further comprises: storing the collected application data of the second application into the local database.

8. The method according to claim 7, wherein
before the storing the collected application data of the first application into the local database, the method further comprises: classifying the collected data of the first application based on an attribute class to which the collected data of the first application belongs; and
before the storing the collected application data of the second application into the local database, the method further comprises: classifying the collected data of the second application based on an attribute class to which the collected data of the second application belongs.

9. A data collection apparatus, comprising:
an application information obtaining unit (1301), configured to: obtain (401) first information of a first application configured to run on the data collection apparatus based on an application framework layer of an operating system of the data collection apparatus, and obtain second information of a second application configured to run on the data collection apparatus based on the application framework layer of the operating system;
a query unit (1302), configured to: query (402) application data collection configuration information based on the first information, to obtain data collection configuration information of the first application, and query the application data collection configuration information based on the second information, to obtain data collection configuration information of the second application, wherein the first information is used to identify the first application, and the second information is used to identify the second application; and
a data collection unit (1303), configured to: collect (403) application data of the first application based on the data collection configuration information of the first application and through an interface provided by the application framework layer of the operating system, and collect application data of the second application based on the data collection configuration information of the second application and the interface provided by the application framework layer of the operating system,
wherein the application information obtaining unit (1301) is configured to:
receive the first information sent by an application manager at the application framework layer, wherein the first information is sent by the application manager when the first application is activated; and receive the second information sent by the application manager at the application framework layer, wherein the second information is sent by the application manager when the second application is activated,
the data collection apparatus further comprises a configuration unit (1306) configured to: send an obtaining request to a server when it is determined, based on the framework layer of the operating system, that an application is updated, wherein the obtaining request is used to request to obtain data collection configuration information of the updated application; and receive the data collection configuration information returned by the server based on the obtaining request.

10. The apparatus according to claim 9, wherein when the first application invokes a reloading method, the application manager determines that the first application is activated; and
when a process of the second application invokes the reloading method, the application manager determines that the second application is activated.

11. The apparatus according to any one of claims 9 or 10, wherein the first information comprises one or more of the following information: a package name of the first application, a uniform resource identifier URI of the first application, a corresponding process name of the first application, and a version of the first application; and
the second information comprises one or more of the following information: a package name of the second application, a URI of the second application, a corresponding process name of the second application, and a version of the second application.

12. The apparatus according to claim 11, wherein the first information further comprises a class name or a thread name of the first application; and
the second information further comprises a class name or a thread name of the second application.

## Patentansprüche

1. Datenerfassungsverfahren, umfassend:
Erhalten (401) von ersten Informationen zu einer ersten Applikation, die auf dem Endgerät läuft, basierend auf einer Applikations-Frameworkschicht eines Betriebssystems des Endgeräts durch ein Datenerfassungsmodul (100) eines Endgeräts, Abfragen (402) von Datenerfassungskonfigurationsinformationen der Applikation basierend auf den ersten Informationen durch das Datenerfassungsmodul (100), um Datenerfassungskonfigurationsinformationen der ersten Applikation zu erhalten, und Erfassen (403) von Applikationsdaten der ersten Applikation basierend auf den Datenerfassungskonfigurationsinformationen der ersten Applikation und über eine Schnittstelle (300) des Endgeräts, die durch die Applikations-Frameworkschicht des Betriebssystems bereitgestellt wird, durch das Datenerfassungsmodul (100), wobei die ersten Informationen zum Identifizieren der ersten Applikation verwendet werden; und
Erhalten (401) von zweiten Informationen zu einer zweiten Applikation, die auf dem Endgerät läuft, basierend auf der Applikations-Frameworkschicht des Betriebssystems durch das Datenerfassungsmodul (100), Abfragen (402) der Datenerfassungskonfigurationsinformationen der Applikation basierend auf den zweiten Informationen durch das Datenerfassungsmodul (100), um Datenerfassungskonfigurationsinformationen der zweiten Applikation zu erhalten, und Erfassen (403) von Applikationsdaten der zweiten Applikation basierend auf den Datenerfassungskonfigurationsinformationen der zweiten Applikation und über die Schnittstelle, die durch die Applikations-Frameworkschicht des Betriebssystems bereitgestellt wird, durch das Datenerfassungsmodul (100), wobei die zweiten Informationen zum Identifizieren der zweiten Applikation verwendet werden, wobei das Erhalten (401) der ersten Informationen der ersten Applikation durch das Datenerfassungsmodul (100) basierend auf der Applikations-Frameworkschicht des Betriebssystems umfasst:
Empfangen der ersten Informationen, die durch einen Applikationsmanager auf der Applikations-Frameworkschicht gesendet wurden, durch das Datenerfassungsmodul (100),
wobei die ersten Informationen durch den Applikationsmanager gesendet werden, wenn die erste Applikation aktiviert wird; und
das Erhalten (401) der zweiten Informationen der zweiten Applikation durch das Datenerfassungsmodul (100) basierend auf der Applikations-Frameworkschicht des Betriebssystems umfasst:
Senden der zweiten Informationen der zweiten Applikation durch den Applikationsmanager auf der Applikations-Frameworkschicht des Betriebssystems, wenn die zweite Applikation aktiviert wird, und Empfangen der durch den Applikationsmanager gesendeten zweiten Informationen durch das Datenerfassungsmodul (100),
wobei das Verfahren des Weiteren umfasst:
Senden einer Erhalteanforderung durch die Konfigurationseinheit (102) an einen Server, wenn basierend auf der Frameworkschicht des Betriebssystem ermittelt wird, dass eine Applikation aktualisiert wird, wobei die Erhalteanforderung verwendet wird, um das Erhalten von Datenerfassungskonfigurationsinformationen der aktualisierten Applikation anzufordern; und
Empfangen der von dem Server basierend auf der Erhalteanforderung zurückgegebenen Datenerfassungskonfigurationsinformationen durch die Konfigurationseinheit (102) .

2. Verfahren nach Anspruch 1, wobei der Applikationsmanager, wenn die erste Applikation eine Nachlademethode aufruft, ermittelt, dass die erste Applikation aktiviert ist; und der Applikationsmanager, wenn ein Prozess der zweiten Applikation die Nachlademethode aufruft, ermittelt, dass die zweite Applikation aktiviert ist.

3. Verfahren nach einem der Ansprüche 1 oder 2, wobei die ersten Informationen eine oder mehrere der folgenden Informationen umfassen: einen Paketnamen der ersten Applikation, einen Uniform Resource Identifier, URI, der ersten Applikation, einen entsprechenden Prozessnamen der ersten Applikation oder eine Version der ersten Applikation; und
die zweiten Informationen eine oder mehrere der folgenden Informationen umfassen: einen Paketnamen der zweiten Applikation, einen URI der zweiten Applikation, einen entsprechenden Prozessnamen der zweiten Applikation und eine Version der zweiten Applikation.

4. Verfahren nach Anspruch 3, wobei die ersten Informationen des Weiteren einen Klassennamen oder einen Thread-Namen der ersten Applikation umfassen; und
die zweiten Informationen des Weiteren einen Klassennamen oder einen Thread-Namen der zweiten Applikation umfassen.

5. Verfahren nach einem der Ansprüche 1 bis 4, wobei die Datenerfassungskonfigurationsinformationen der Applikation umfassen:
eine konfigurierte Liste aller Applikationen, deren Daten erfasst werden müssen; und
Konfigurationsinformationen zum Datenerfassungseintrag einer Applikation, deren Daten erfasst werden müssen, wobei die Konfigurationsinformationen zum Datenerfassungseintrag einer Applikation verwendet werden, um zu definieren, welche Applikationsdaten der Applikation erfasst werden sollen.

6. Verfahren nach Anspruch 5, wobei die Konfigurationsinformationen zum Datenerfassungseintrag eine oder mehrere der folgenden Informationen umfassen:
einen oder mehrere von einem Namen, einem Typ oder einem entsprechenden Objektnamen einer Applikationssteuerung; und
einen oder mehrere von einem Tag-Namen oder einem Tag-Typ, die in Auszeichnungssprache (Markup Language, ML) auf einer Webseite verwendet werden.

7. Verfahren nach einem der Ansprüche 1 bis 6, wobei das Verfahren nach dem Erfassen von Applikationsdaten der ersten Applikation des Weiteren umfasst: Speichern der erfassten Applikationsdaten der ersten Applikation in einer lokalen Datenbank; und
das Verfahren nach dem Erfassen von Applikationsdaten der zweiten Applikation des Weiteren umfasst: Speichern der erfassten Applikationsdaten der zweiten Applikation in der lokalen Datenbank.

8. Verfahren nach Anspruch 7, wobei
das Verfahren vor dem Speichern der erfassten Applikationsdaten der ersten Applikation in der lokalen Datenbank des Weiteren umfasst: Klassifizieren der erfassten Daten der ersten Applikation basierend auf einer Attributklasse, zu der die erfassten Daten der ersten Applikation gehören; und
das Verfahren vor dem Speichern der erfassten Applikationsdaten der zweiten Applikation in der lokalen Datenbank des Weiteren umfasst: Klassifizieren der erfassten Daten der zweiten Applikation basierend auf einer Attributklasse, zu der die erfassten Daten der zweiten Applikation gehören.

9. Datenerfassungsvorrichtung, umfassend:
eine Applikationsinformationserhalteeinheit (1301), die konfiguriert ist zum: Erhalten (401) von ersten Informationen einer ersten Applikation, die zum Laufen auf der Datenerfassungsvorrichtung konfiguriert ist, basierend auf einer Applikations-Frameworkschicht eines Betriebssystems der Datenerfassungsvorrichtung, und Erhalten von zweiten Informationen einer zweiten Applikation, die zum Laufen auf der Datenerfassungsvorrichtung konfiguriert ist, basierend auf der Applikations-Frameworkschicht des Betriebssystems;
eine Abfrageeinheit (1302), die konfiguriert ist zum:
Abfragen (402) von Datenerfassungskonfigurationsinformationen der Applikation basierend auf den ersten Informationen, um Datenerfassungskonfigurationsinformationen der ersten Applikation zu erhalten, und Abfragen der Datenerfassungskonfigurationsinformationen der Applikation basierend auf den zweiten Informationen, um Datenerfassungskonfigurationsinformationen der zweiten Applikation zu erhalten, wobei die ersten Informationen zum Identifizieren der ersten Applikation verwendet werden und die zweiten Informationen zum Identifizieren der zweiten Applikation verwendet werden; und
eine Datenerfassungseinheit (1303), die konfiguriert ist zum: Erfassen (403) von Applikationsdaten der ersten Applikation basierend auf den Datenerfassungskonfigurationsinformationen der ersten Applikation und über eine Schnittstelle, die durch die Applikations-Frameworkschicht des Betriebssystems bereitgestellt wird, und Erfassen von Applikationsdaten der zweiten Applikation basierend auf den Datenerfassungskonfigurationsinformationen der zweiten Applikation und der Schnittstelle, die durch die Applikations-Frameworkschicht des Betriebssystems bereitgestellt wird,
wobei die Applikationsinformationserhalteeinheit (1301) konfiguriert ist zum: Empfangen der ersten Informationen, die durch einen Applikationsmanager auf der Applikations-Frameworkschicht gesendet werden, wobei die ersten Informationen durch den Applikationsmanager gesendet werden, wenn die erste Applikation aktiviert wird; und Empfangen der zweiten Informationen, die von dem Applikationsmanager auf der Applikations-Frameworkschicht gesendet werden, wobei die zweiten Informationen durch den Applikationsmanager gesendet werden, wenn die zweite Applikation aktiviert wird,
wobei die Datenerfassungsvorrichtung des Weiteren eine Konfigurationseinheit (1306) umfasst, die konfiguriert ist zum: Senden einer Erhalteanforderung an einen Server, wenn basierend auf der Frameworkschicht des Betriebssystems ermittelt wird, dass eine Applikation aktualisiert wird, wobei die Erhalteanforderung verwendet wird, um das Erhalten von Datenerfassungskonfigurationsinformationen der aktualisierten Applikation anzufordern; und Empfangen der von dem Server basierend auf der Erhalteanforderung zurückgegebenen Datenerfassungskonfigurationsinformationen.

10. Vorrichtung nach Anspruch 9, wobei der Applikationsmanager, wenn die erste Applikation eine Nachlademethode aufruft, ermittelt, dass die erste Applikation aktiviert wird; und
der Applikationsmanager, wenn ein Prozess der zweiten Applikation die Nachlademethode aufruft, ermittelt, dass die zweite Applikation aktiviert wird.

11. Vorrichtung nach einem der Ansprüche 9 oder 10, wobei die ersten Informationen eine oder mehrere der folgenden Informationen umfassen: einen Paketnamen der ersten Applikation, einen Uniform Resource Identifier, URI, der ersten Applikation, einen entsprechenden Prozessnamen der ersten Applikation und eine Version der ersten Applikation; und
die zweiten Informationen eine oder mehrere der folgenden Informationen umfassen: einen Paketnamen der zweiten Applikation, einen URI der zweiten Applikation, einen entsprechenden Prozessnamen der zweiten Applikation und eine Version der zweiten Applikation.

12. Vorrichtung nach Anspruch 11, wobei die ersten Informationen des Weiteren einen Klassennamen oder einen Thread-Namen der ersten Applikation umfassen; und
die zweiten Informationen des Weiteren einen Klassennamen oder einen Thread-Namen der zweiten Applikation umfassen.

## Revendications

1. Procédé de collecte de données, comprenant :
l'obtention (401), par un module de collecte de données (100) d'un terminal, de premières informations d'une première application exécutée sur le terminal sur la base d'une couche de structure d'application d'un système d'exploitation du terminal, l'interrogation (402), par le module de collecte de données (100), d'informations de configuration de collecte de données d'application en fonction des premières informations, pour obtenir des informations de configuration de collecte de données de la première application, et la collecte (403), par le module de collecte de données (100), de données d'application de la première application en fonction des informations de configuration de collecte de données de la première application et par l'intermédiaire d'une interface (300) du terminal fourni par la couche de structure d'application du système d'exploitation, les premières informations servant à identifier la première application ; et
l'obtention (401), par le module de collecte de données (100), de secondes informations d'une seconde application exécutée sur le terminal sur la base de la couche de structure d'application du système d'exploitation, l'interrogation (402), par le module de collecte de données (100), des informations de configuration de collecte de données d'application en fonction des secondes informations, pour obtenir des informations de configuration de collecte de données de la seconde application, et la collecte (403), par le module de collecte de données (100), de données d'application de la seconde application en fonction des informations de configuration de collecte de données de la seconde application et de l'interface fournie par la couche de structure d'application du système d'exploitation, les secondes informations servant à identifier la seconde application,
dans lequel
l'obtention (401), par le module de collecte de données (100), des premières informations de la première application sur la base de la couche de structure d'application du système d'exploitation comprend :
la réception, par le module de collecte de données (100), des premières informations envoyées par un gestionnaire d'application au niveau de la couche de structure d'application, les premières informations étant envoyées par le gestionnaire d'application lorsque la première application est activée ; et
l'obtention (401), par le module de collecte de données (100), des secondes informations de la seconde application sur la base de la couche de structure d'application du système d'exploitation comprend :
l'envoi, par le gestionnaire d'application à la couche de structure d'application du système d'exploitation, des secondes informations de la seconde application lorsque la seconde application est activée, et la réception, par le module de collecte de données (100), des secondes informations envoyées par le gestionnaire d'application,
le procédé comprenant en outre :
l'envoi, par l'unité de configuration (102), d'une demande d'obtention à un serveur lorsqu'il est déterminé, sur la base de la couche de structure du système d'exploitation, qu'une application est mise à jour, la demande d'obtention servant à demander l'obtention d'informations de configuration de collecte de données de l'application mise à jour ; et
la réception, par l'unité de configuration (102), des informations de configuration de collecte de données renvoyées par le serveur en fonction de la demande d'obtention.

2. Procédé selon la revendication 1, dans lequel lorsque la première application appelle un procédé de rechargement, le gestionnaire d'application détermine que la première application est activée ; et
lorsqu'un processus de la seconde application appelle le procédé de rechargement, le gestionnaire d'application détermine que la seconde application est activée.

3. Procédé selon l'une quelconque des revendications 1 ou 2, dans lequel les premières informations comprennent une ou plusieurs des informations suivantes: un nom de progiciel de la première application, un identifiant de ressource uniforme, URI, de la première application, un nom de processus correspondant de la première application ou une version de la première application ; et
les secondes informations comprennent une ou plusieurs des informations suivantes : un nom de progiciel de la seconde application, un URI de la seconde application, un nom de processus correspondant de la seconde application et une version de la seconde application.

4. Procédé selon la revendication 3, dans lequel les premières informations comprennent en outre un nom de classe ou un nom de fil d'exécution de la première application ; et
les secondes informations comprennent en outre un nom de classe ou un nom de fil d'exécution de la seconde application.

5. Procédé selon l'une quelconque des revendications 1 à 4, dans lequel les informations de configuration de collecte de données d'application comprennent :
une liste configurée d'applications dont les données doivent être collectées ; et
des informations de configuration d'éléments de collecte de données d'une application dont les données doivent être collectées, les informations de configuration d'éléments de collecte de données d'une application servant à définir les données d'application de l'application qui doivent être collectées.

6. Procédé selon la revendication 5, dans lequel les informations de configuration d'éléments de collecte de données comprennent une ou plusieurs des informations suivantes :
un ou plusieurs d'un nom, d'un type ou d'un nom d'objet correspondant d'une commande d'application ; et
un ou plusieurs d'un nom de balise ou d'un type de balise utilisés dans un langage de balisage sur une page Web.

7. Procédé selon l'une quelconque des revendications 1 à 6, le procédé comprenant en outre
après la collecte de données d'application de la première application : la mémorisation des données d'application collectées de la première application dans une base de données locale ; et
après la collecte de données d'application de la seconde application : la mémorisation des données d'application collectées de la seconde application dans la base de données locale.

8. Procédé selon la revendication 7, le procédé comprenant en outre
avant la mémorisation des données d'application collectées de la première application dans la base de données locale : le classement des données collectées de la première application en fonction d'une classe d'attributs à laquelle appartiennent les données collectées de la première application ; et
avant la mémorisation des données d'application collectées de la seconde application dans la base de données locale : le classement des données collectées de la seconde application en fonction d'une classe d'attributs à laquelle appartiennent les données collectées de la seconde application.

9. Appareil de collecte de données, comprenant :
une unité d'obtention d'informations d'application (1301), configurée pour : obtenir (401) des premières informations d'une première application configurée pour être exécutée sur l'appareil de collecte de données sur la base d'une couche d'infrastructure d'application d'un système d'exploitation de l'appareil de collecte de données, et obtenir des secondes informations d'une seconde application configurée pour être exécutée sur l'appareil de collecte de données en fonction de la couche d'infrastructure d'application du système d'exploitation ;
une unité de demande (1302), configurée pour : interroger (402) les informations de configuration de collecte de données d'application en fonction des premières informations, pour obtenir des informations de configuration de collecte de données de la première application, et interroger les informations de configuration de collecte de données d'application en fonction des secondes informations, pour obtenir des informations de configuration de collecte de données de la seconde application, les premières informations servant à identifier la première application, et les secondes informations servant à identifier la seconde application ; et
une unité de collecte de données (1303), configurée pour :
collecter (403) des données d'application de la première application en fonction des informations de configuration de collecte de données de la première application et par l'intermédiaire d' une interface fournie par la couche d'infrastructure d'application du système d'exploitation, et
collecter des données d'application de la seconde application en fonction des informations de configuration de collecte de données de la seconde application et de l'interface fournie par la couche d'infrastructure d'application du système d'exploitation,
dans lequel l'unité d'obtention d'informations d'application (1301) est configurée pour : recevoir les premières informations envoyées par un gestionnaire d'application au niveau de la couche d'infrastructure d'application, les premières informations étant envoyées par le gestionnaire d'application lorsque la première application est activée ; et recevoir les secondes informations envoyées par le gestionnaire d'application au niveau de la couche d'infrastructure d'application, les secondes informations étant envoyées par le gestionnaire d'application lorsque la seconde application est activée,
l'appareil de collecte de données comprend en outre une unité de configuration (1306) configurée pour : envoyer une demande d'obtention à un serveur lorsqu'il est déterminé, sur la base de la couche de structure du système d'exploitation, qu'une application est mise à jour, la demande d'obtention servant à demander l'obtention d'informations de configuration de collecte de données de l'application mise à jour ; et recevoir les informations de configuration de collecte de données renvoyées par le serveur en fonction de la demande d'obtention.

10. Appareil selon la revendication 9, dans lequel lorsque la première application appelle un procédé de rechargement, le gestionnaire d'application détermine que la première application est activée ; et
lorsqu'un processus de la seconde application appelle le procédé de rechargement, le gestionnaire d'application détermine que la seconde application est activée.

11. Appareil selon l'une quelconque des revendications 9 ou 10, dans lequel les premières informations comprennent une ou plusieurs des informations suivantes : un nom de progiciel de la première application, un identifiant de ressource uniforme, URI, de la première application, un nom de processus correspondant de la première application ou une version de la première application ; et
les secondes informations comprennent une ou plusieurs des informations suivantes : un nom de progiciel de la seconde application, un URI de la seconde application, un nom de processus correspondant de la seconde application et une version de la seconde application.

12. Appareil selon la revendication 11, dans lequel les premières informations comprennent en outre un nom de classe ou un nom de fil d'exécution de la première application ; et
les secondes informations comprennent en outre un nom de classe ou un nom de fil d'exécution de la seconde application.
